# EUROPÄISCHE PATENTSCHRIFT

(11) **EP 1 082 892 B1**
(45) Veröffentlichungstag und Bekanntmachung des Hinweises auf die Patenterteilung: **13.04.2005**
(21) Anmeldenummer: 00119704.5
(22) Anmeldetag: 09.09.2000
(51) Int. Cl.: A01D 34/76, F16H 7/12

(54) **Mähwerk und Fahrzeug bzw. Gerät**
Mower and vehicle or apparatus
Faucheuse et véhicule ou appareil

(30) Priorität: 10.09.1999 US 393804
(43) Veröffentlichungstag der Anmeldung: 14.03.2001
(73) Patentinhaber: DEERE & COMPANY, Moline, Illinois 61265-8098 (US)
(72) Erfinder: Holland, Ronald Paul, Fox Lake, WI 53933 (US); Thorman, Christopher Scott, Beaver Dam, WI 53916 (US)
(74) Vertreter: Magin, Ludwig Bernhard

(56) Entgegenhaltungen:
- EP-A- 0 038 233
- EP-A- 0 053 954
- EP-A- 0 487 146
- US-A- 3 817 114
- US-A- 4 016 709
- US-A- 5 836 144

## Beschreibung

Die Erfindung betrifft ein Mähwerk mit mindestens einem synchronisierten Zugmittelgetriebe und mit zumindest einer Spanneinrichtung mit zwei oder mehr Spannscheiben, die auf ein Zugmittel des Zugmittelgetriebes einwirken können und welche auf einer durch ein Spannmittel belastbaren Halterung vorzugsweise drehbar vorgesehen sind, sowie ein Fahrzeug bzw. Gerät zur Rasen-, Garten- bzw. Grundstückspflege.

Fahrzeuge wie Rasen- und Gartentraktoren sind oftmals daran angepaßt, Anbaugeräte wie Mähwerke aufzunehmen und zu betreiben, und es ist üblicherweise ein Riementrieb vorgesehen, der eine Riemenscheibe aufweist, welche mit einer Kurbelwelle eines Fahrzeugantriebs verbunden ist. Ein Keilriemen bzw. ein Zugmittel ist sowohl um eine Riemenscheibe auf der Kurbelwelle wie auch um eine Riemenscheibe geschlungen, welche wirksam mit Spindeln des Mähwerks verbunden ist. Oftmals ist der Keilriemen, der um die Kurbelwellenriemenscheibe geschlungen ist, Teil einer ersten Antriebseinheit, welche mit einer zweiten Antriebseinheit über eine Doppel-Riemenscheiben-Übersetzungsanordnung in Verbindung steht, welche beispielsweise eine Spindel des Mähwerks als Übersetzungswelle zur Verbindung zweier Riemenscheiben der Übersetzungsanordnung sein kann.

Es sind synchronisierte oder zeitgesteuerte Antriebe bekannt, welche es einer Mehrzahl von Mähmessern erlauben, sich in ihren Schneidkreisen zu überlappen, ohne aufeinander einzuwirken. Synchronisierte Antriebe werden an Mähwerken mit mehreren Mähmessern als eine zweite Antriebseinheit eingesetzt, welche in Verbindung mit dem ersten Antrieb wirken, um eine passende Messerausrichtung aufrechtzuerhalten, um Wechselwirkungen zu verhindern. Eine typische synchronisierte zweite Antriebseinheit weist als Übertragungsmittel oftmals einen' Zahnriemen oder eine Kette auf, welche mit einem Zahnrad auf jeder der Mähspindeln zusammenwirkt und wenigstens eine Spannfreilaufscheibe auf, welche üblicherweise federbelastet ist, um den Riemen zu spannen. Eine solche Anordnung wird beispielsweise in der US-A-5,836,144 gezeigt.

Das der Erfindung zugrunde liegende Problem wird darin gesehen, daß bei bekannten Antriebseinheiten für Mähwerke die Spannung in dem Übertragungsmittel nicht ausreicht, um ein Rutschen des Übertragungsmittels zu verhindern bzw. daß es aufgrund zu hoher Spannungen in dem Übertragungsmittel zu Beschädigungen desselben oder der Antriebseinheit kommen kann.

Dieses Problem wird erfindungsgemäß durch die Lehre der Patentansprüche 1 und 11 gelöst, wobei in den weiteren Patentansprüchen die Lösung in vorteilhafter Weise weiterentwickelnde Merkmale aufgeführt sind.

Auf diese Weise wird ein Mähwerk mit einer Spanneinrichtung für ein synchronisiertes Zugmittelgetriebe zur Verfügung gestellt, welches einen festen und symmetrischen Halt für die Spannrollen während und nach einem Spannen des Zugmittels aufweist. Darüber hinaus kann das Zugmittel in einfacher Weise gespannt werden und es wird sichergestellt, daß ein hohes Maß an Zugmittelumschlingung auftritt, um einem Rutschen des Zugmittels entgegenzuwirken. Hierzu sind auf der Halterung eine Mehrzahl von Spannrollen drehbar vorgesehen. Ein Endbereich der Halterung wirkt mit einem Anschlag zusammen, der an dem Mähwerk bzw. dessen Gehäuse befestigt ist, um die Bewegung der Halterung zu begrenzen, während ein zweiter Endbereich der Halterung durch ein Spannmittel belastet wird, das zumindest im wesentlichen in Richtung des Anschlags wirkt. Die Halterung weist einen länglichen Schlitz bzw. ein Langloch auf, das zwischen einer der Spannrollen und dem Anschlag angeordnet ist, und das mit an dem Gehäuse bzw. dem Mähwerk vorgesehenen Mitteln zusammenwirken kann, um vorbestimmte Bewegungsmöglichkeiten der Halterung zu ermöglichen. Hierzu greift ein Stift, Bolzen oder eine Schraube in den Schlitz ein, wodurch ein Verschwenken der Halterung um - denselben zugelassen wird. Darüber hinaus kann sich die Halterung bezogen auf das Langloch verschieben. Bei dem Zugmittel kann es sich im Geist der vorliegenden Erfindung beispielsweise um eine Kette oder einen Riemen, beispielsweise einen üblichen Keilriemen, handeln. Vorzugsweise wird das Zugmittel aber durch einen oder mehrere Zahnriemen gebildet.

Die Spanneinrichtung kann zur Erzeugung der Belastung der Halterung ein Spannmittel bzw. eine Feder aufweisen. Es kann sich hierbei um eine Schraubenfeder handeln, es ist aber auch die Verwendung anderer Federarten denkbar. Abgesehen von einer Feder, bei der es sich um ein gängiges, einfaches und daher preisgünstiges Bauteil handelt, können auch andere Federmittel beispielsweise in der Art von Pneumatikzylindern Verwendung finden.

Sind Mittel zur Veränderung der Federspannung vorgesehen, so kann der Druck, der durch die Feder bzw. durch die Spanneinrichtung auf das Zugmittel ausgeübt wird, verändert werden. Dies kann wichtig sein, um Veränderungen der Länge des Zugmittels auszugleichen, wie sie beispielsweise durch eine im Laufe des Betriebs auftretende Verlängerung des Zugmittels oder auch durch Längenschwankungen aufgrund wechselnder Temperaturverhältnisse auftreten können. Auch eine Anpassung an wechselnde Zugmittel, bei denen sich Längenunterschiede beispielsweise aufgrund von Fertigungstoleranzen ergeben können, ist so möglich. Darüber hinaus kann die Spannung des Zugmittels reduziert werden, um dieses zu Wartungszwecken oder aufgrund eines Austauschs von dem Zugmittelgetriebe entfernen zu können.

Weist die Spanneinrichtung einen Spannbolzen, der sich durch die Feder bzw. das Spannmittel erstreckt, eine Spannmutter, die auf dem Spannbolzen verstellbar angeordnet ist, sowie eine Spannhülse auf, die sich in Abhängigkeit von der Stellung der Spannmutter entlang einer Längsachse des Spannbolzens bewegt, so ist eine Verstellung der Halterung bzw. der auf das Zugmittel einwirkenden Belastung möglich, indem die Spannmutter auf dem Spannbolzen verstellt wird. Dies kann dadurch erfolgen, daß an der Spannmutter direkt oder mittels eines (Motor-) Werkzeugs angegriffen wird. Es ist aber auch denkbar, mittels (Motor-)Werkzeugen an dem Spannbolzen anzugreifen. Dieser kann hierzu beispielsweise einen sechskantförmigen oder anderweitig angepaßten Endbereich aufweisen, da die Spannmutter weniger gut zugänglich ist und hierbei nur beispielsweise mittels eines Schraubenschlüssels gegen ein Verdrehen gesichert werden muß.

Um einem Abrutschen der Spannhülse entgegenzuwirken und um somit eine dauerhafte Beziehung zwischen der Spannhülse bzw. dem Spannbolzen und der Halterung aufrechterhalten zu können, können die Spannhülse bzw. die Halterung wenigstens einen Vorsprung und eine Vertiefung aufweisen, die zusammenwirken können, um so die Position der Spannhülse bezogen auf die Halterung zu bestimmen. Es können auch zwei oder mehr Vorsprünge und Vertiefungen vorgesehen sein.

Sind zumindest die erste und die zweite Spannscheibe auf bezogen auf die Verbindung der Halterung mit dem Gehäuse gegenüberliegenden Seiten der Halterung angebracht, so ergibt sich ein gute Umschlingung der Spannscheiben sowie von Antriebsscheiben des Zugmittelgetriebes durch das Zugmittel.

Eine einfache und kompakte Ausführung ergibt sich, wenn die Halterung eine obere und eine untere Platte aufweist, die vorzugsweise zumindest im wesentlichen identisch ausgeführt sind. Auf diese Weise können die Spannscheiben und das Zugmittel zwischen den Platten angeordnet bzw. gelagert sein, wodurch die Halterung als Ganzes zusammen mit den Spannscheiben an- bzw. abgebaut werden kann und darüber hinaus einem Herunterspringen des Zugmittels entgegengewirkt wird.

Wird wenigstens eine der Spannscheiben von dem Übertragungsmittel um wenigstens 180 Grad umschlungen, so wird der Gefahr eines Durchrutschens des Zugmittels und damit einem nicht mehr synchronisierten Lauf des Zugmittelgetriebes entgegengewirkt und eine gute Spannwirkung der Spannscheiben gewährleistet.

Zugmittelgetriebe können zum Antrieb einer einzelnen an dem Mähwerk vorgesehenen Arbeitseinheit, wie einem Mähmesser beispielsweise in der Art eines Sichelmessers eingesetzt werden. Besonders geeignet sind synchronisierte Zugmittelgetriebe aber für den Antrieb mehrerer Arbeitseinheiten und insbesondere dann, wenn sich die Wirkungs- bzw. Schneidkreise der Arbeitseinheiten bzw. Mähmesser überschneiden, so daß durch das Zugmittelgetriebe gewährleistet werden muß, daß es zu keiner Interaktion zwischen den Arbeitseinheiten und damit zu Beschädigungen oder auch einer schlechten Wirkungsweise der Arbeitseinheiten kommen kann. Besonders auch bei sich gegenläufig bewegenden bzw. rotierenden Arbeitseinheiten muß die Stellung der Arbeitseinheiten möglichst sicher beibehalten werden, um beispielsweise einem Unwuchtverhalten oder einem Aufeinandertreffen der Arbeitseinheiten bzw. der Mähmesser entgegenzuwirken.

Um es einer Bedienungsperson möglich zu machen, die Stellung der Arbeitseinheiten zu überwachen und im Falle einer Fehlstellung bzw. Fehlpositionierung eingreifen zu können, sind an den den Arbeitseinheiten zugeordneten Antriebsscheiben Mittel zur Anzeige der Stellung der Arbeitseinheiten vorgesehen. Solche Mittel können in einfacher Weise durch eine Markierung oder eine Vertiefung oder einen Vorsprung auf der Arbeitsscheibe gebildet werden, so daß der Bedienungsperson eine visuelle Anzeige zur Verfügung steht.

Ein solches Mähwerk eignet sich insbesondere zur Verwendung an einem Fahrzeug bzw. Gerät zur Rasen-, Garten- bzw. Grundstückspflege. An einem solchen Fahrzeug bzw. Gerät kann ein einzelnes Mähwerk angebracht sein, es kann aber mit mehreren Mähwerken beispielsweise in einem Front- oder Heckbereich oder auch an den Seiten oder unterhalb des Fahrzeugs oder Geräts angeordnet sein. Es kann sich beispielsweise um selbstfahrende Fahrzeuge oder Geräte und auch um handgeschobene oder auch handgeführte Geräte handeln.

In der Zeichnung ist ein nachfolgend näher beschriebenes Ausführungsbeispiel der Erfindung dargestellt. Es zeigt:
- Fig. 1: eine Seitenansicht eines Geräts zur Rasen-, Garten- und Grundstückspflege mit einem Mähwerk,
- Fig. 2: eine perspektivische Ansicht des Mähwerks mit einem ersten Zugmittelgetriebe und einem zweiten erfindungsgemäßen Zugmittelgetriebe,
- Fig. 3: das erste Zugmittelgetriebe in Explosionsdarstellung,
- Fig. 4: eine Ansicht des ersten Zugmittelgetriebes mit einem Spannungslösegriff in einer normalen Stellung,
- Fig. 5: das Zugmittelgetriebe aus Fig. 4, wobei sich der Spannungslösegriff in einer Stellung befindet, in der das Zugmittel nicht gespannt ist, und
- Fig. 6: eine Explosionsdarstellung des zweiten Zugmittelgetriebes.

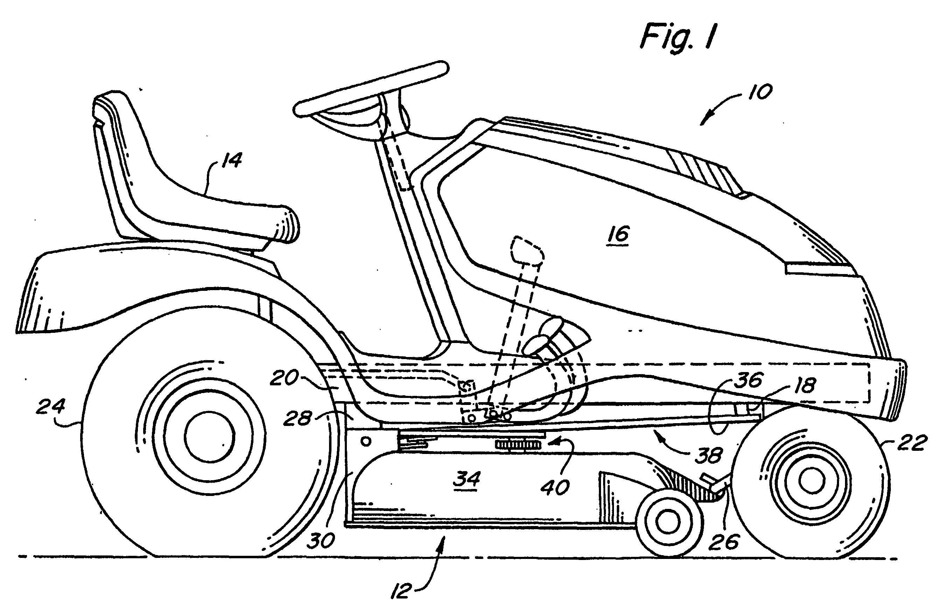

Es wird zuerst Fig. 1 betrachtet, in der ein Fahrzeug zur Rasen-, Garten- bzw. Grundstückspflege bzw. ein Gerät 10 gezeigt wird, das unter sich ein Mähwerk 12 trägt. Das Gerät 10 weist einen Bedienersitz 14, eine Haube 16 und einen Antrieb (nicht gezeigt) auf, welcher eine Kurbelwelle 18 aufweist, die sich durch ein Chassis 20 des Geräts 10 erstreckt und unterhalb dessen austritt. Das Gerät 10 weist weiter vordere, lenkbare Räder 22 wie auch rückwärtige, antreibbare Räder 24 auf.

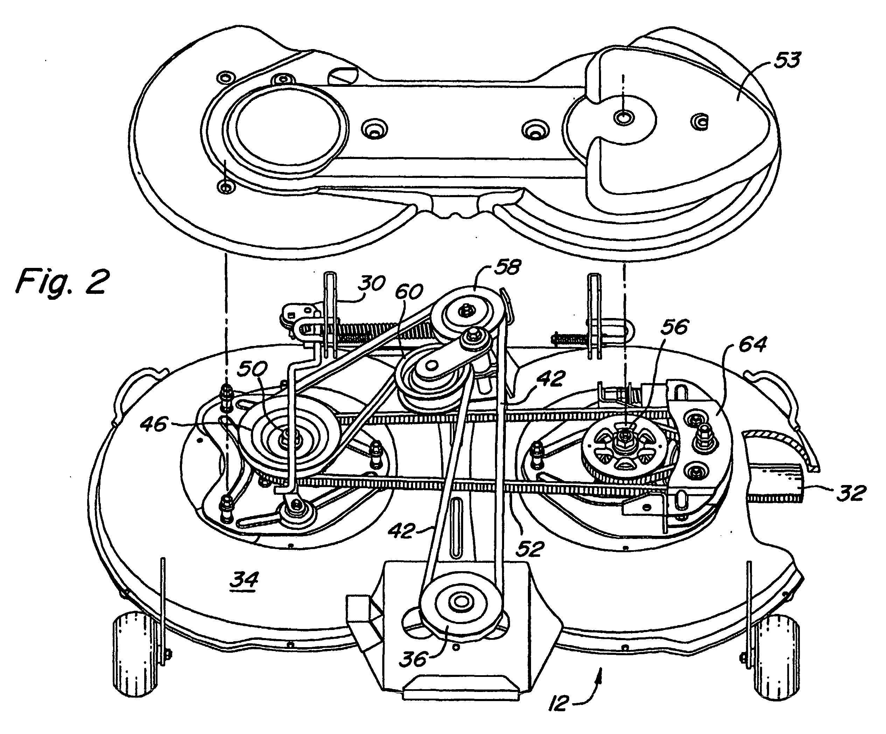

Das Mähwerk 12 ist in vertikaler Richtung verstellbar und ist an dem Gerät 10 über ein vorderes Tragelement 26 angeschlossen, das es voranzieht. An seinem rückwärtigen Bereich ist das Mähwerk 12 mit dem Gerät 10 über ein Gestänge 28 verbunden, das sich von dem Chassis 20 aus erstreckt und an dem Mähwerk 12 an einer Tragkonsole 30 auf jeder Seite des Mähwerks 12 angreift. Das Mähwerk 12 schließt Mähmesser 32 (in Figur 2 gezeigt) ein, welche innerhalb eines Gehäuses 34 rotieren, um Pflanzenwuchs zu schneiden, wenn sich das Gerät 10 über den Untergrund bewegt. Die Mähmesser 32 werden durch die Kurbelwelle 18 des Geräts 10 durch eine Antriebsriemenscheibe bzw. Antriebsscheibe 36, die auf der Kurbelwelle 18 angebracht ist, angetrieben, welche mit den Mähmessern 32 über erste und zweite Antriebseinheiten bzw. Zugmittelgetriebe 38, 40 verbunden ist. In der bevorzugten Ausführungsform ist eine elektrische Kupplung (nicht gezeigt) an der Kurbelwelle 18 vorgesehen, um ein bequemes In-Eingriff-Bringen und Außer-Eingriff-Bringen der Antriebsscheibe 36 und dadurch eine Übertragung von Kraft an das Mähwerk 12 durch das erste Zugmittelgetriebe 38 zu erlauben.

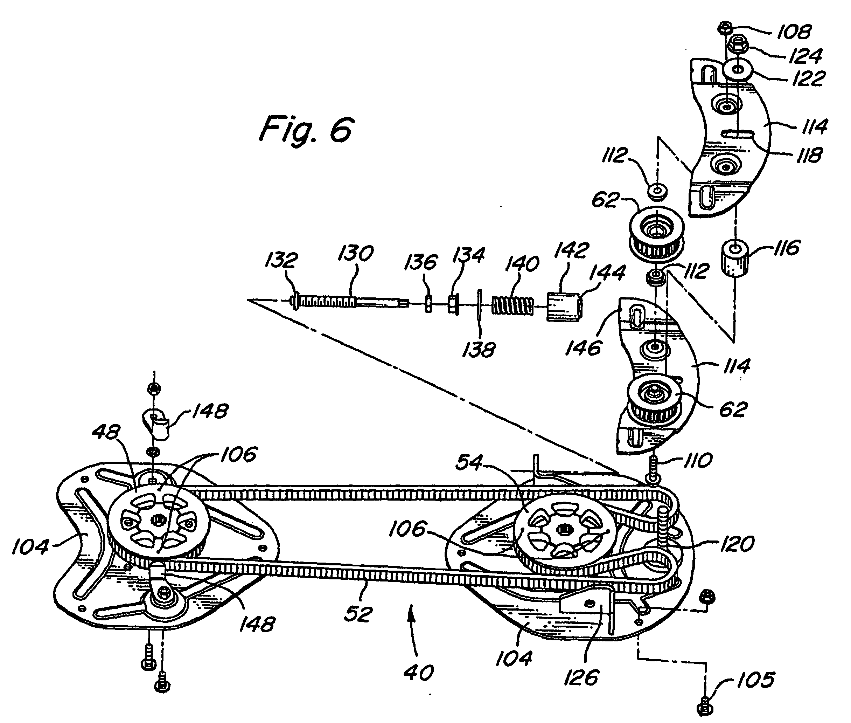

In Figur 2 wird eine perspektivische Ansicht des Mähwerks 12 gezeigt, die das erste und das zweite Zugmittelgetriebe 38, 40 deutlicher darstellt, welche Rotationsantriebskraft von der Antriebsscheibe 36 zu den Mähmessern 32 übertragen. Ein erster Antriebsriemen bzw. ein erstes Zugmittel 42 wird durch die Antriebsscheibe 36 angetrieben und greift an einer Doppelriemenscheibe (in Figur 6 gezeigt) an, die eine erste Antriebsscheibe 46 und eine zweite Antriebsscheibe 48 (in Figur 6 gezeigt) aufweist, die beabstandet auf einer vertikal ausgerichteten Messerspindel 50 (auf der rechten Seite des Mähwerks 12, betrachtet aus der Sicht einer Bedienungsperson dem Bedienersitz 14) angeordnet sind, welche als eine Übersetzungsanordnung bzw. eine Übersetzungswelle zwischen der ersten Antriebsscheibe 46 und der zweiten Antriebsscheibe 48 wirkt. Ein zweiter Antriebsriemen bzw. ein zweites Übertragungsmittel 52 ist unter einer Abdeckung 53 angeordnet und wird durch die Antriebsscheibe 48 der Übersetzungswelle angetrieben und greift an einer weiteren Antriebsscheibe 54 an, welche an einer weiteren vertikal ausgerichteten Messerspindel 56 angebracht ist. Die Mähmesser 32, die mit den unteren Bereichen der Messerspindeln 50, 56 verbunden sind, werden wirksam durch die ersten und zweiten Zugmittelgetriebe 38, 40 angetrieben, um in dem Gehäuse 34 des Mähwerks 12 zu rotieren, um so Vegetation und Gras zu schneiden. Wenn die Antriebsscheibe 36 durch den Antrieb angetrieben wird, wird die rotierende Ausgabe der Antriebsscheibe 36 zu den Mähmessern 32 über das erste Zugmittel 42, die Übersetzungswelle, das zweite Zugmittel 52, die Antriebsscheiben 48, 54 und die Messerspindeln 50, 56 übertragen. Ein Paar erster Antriebsfreilaufscheiben bzw. Spannscheiben 58, 60 ist an dem Mähwerk 12 vorgesehen und dient dazu, das erste Zugmittel 42 zu spannen, während ein Paar zweiter Antriebsfreilaufscheiben bzw. Spannscheiben 62 an einer zweiten Freilaufhalterung bzw. Halterung 64 vorgesehen ist und dazu dient, den zweiten Antriebsriemen 52 zu spannen.

In der gezeigten Ausführungsform rotieren die Mähmesser 32 gegensinnig und ihre Schneidkreise überlappen sich, so daß es notwendig ist, ihre relative Stellung während ihres Rotierens zu steuern. Daher ist es wünschenswert, das zweite Zugmittelgetriebe 40 als einen synchronisierten oder zeitgesteuerten Antrieb auszuführen. In dem gezeigten zweiten Zugmittelgetriebe 40 sind die Antriebsscheiben 48, 54 sowie die Spannscheiben 62 als Zahnräder ausgeführt, welche an passenden Zähnen an dem zweiten Zugmittel 52 angreifen, obwohl ein Kettenantrieb alternativ verwendet werden könnte.

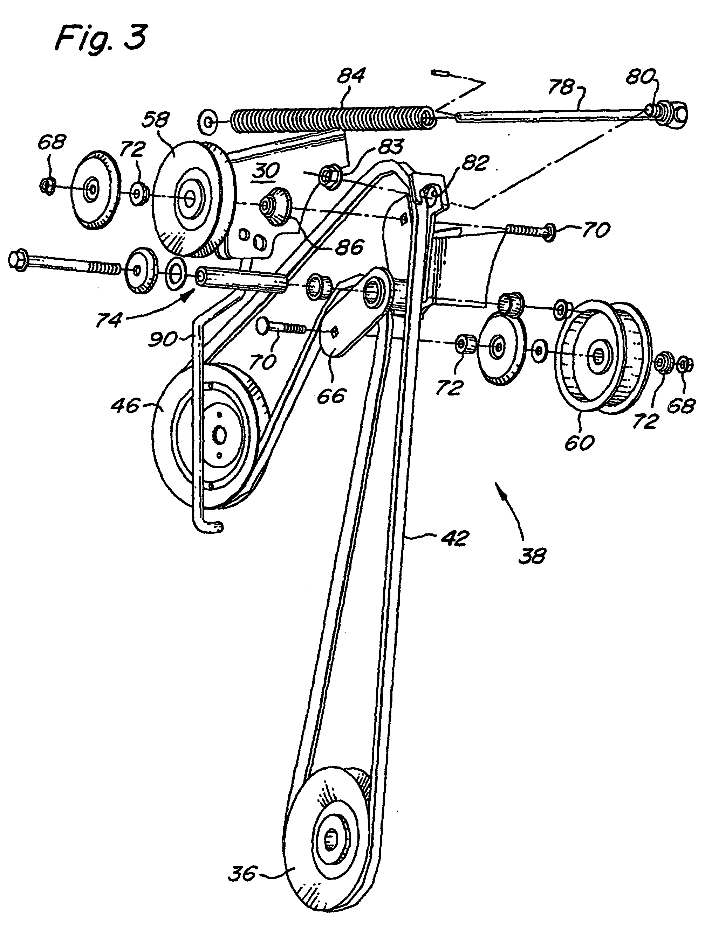

Es wird nun auf Fig. 3 Bezug genommen, in der das erste Zugmittelgetriebe 38 in Explosionsdarstellung gezeigt wird. Das erste Zugmittel 42 erhält eine rotierende Eingabe von der Antriebsscheibe 36. Während einer Rotation des Zugmittels 42 wird ein fester Punkt auf dem Zugmittel 42 von der Antriebsscheibe 36 um die stramm anliegende Spannscheibe 58 wandern, als nächstes auf die erste Antriebsscheibe 46 stoßen, um die das Zugmittel 42 geschlungen ist, um Kraft an diese zu übertragen. Von der ersten Antriebsscheibe 46 wird der feste Punkt auf dem Zugmittel 42 auf die rückwärtige Spannscheibe 60 treffen, um dann zu der Antriebsscheibe 36 zurückzugelangen.

Die stramm anliegende erste Spannscheibe 58 und die rückwärtige erste Spannscheibe 60 werden durch eine erste Freilaufhalterung bzw. eine Halterung 66 gehalten, welche eine feste Beziehung zwischen ihnen aufrecht erhält. Die Spannscheiben 58, 60 sind rotierbar mit der Halterung 66 über Muttern 68 und Schrauben 70 und einer Serie von Lagerbüchsen 72 verbunden, welche es den Spannscheiben 58, 60 erlauben, sich bezogen auf die Halterung 66 frei zu drehen. Eine Riemenleiteinrichtung 73 der Halterung 66 trägt dazu bei, das Zugmittel 42 richtig um die stramm anliegende Spannscheibe 58 während eines Betriebs geschlungen zu halten.

Die erste Halterung 66 wiederum wird durch eine Schwenkwelle 74, in Form einer Schrauben-, Hülsen- und Lageranordnung aufgenommen, die sich durch eine zentrale Aussparung in der Halterung 66 erstreckt, wodurch die Halterung 66 mit dem Gehäuse 34 (Figur 2) schwenkbar an einer Aufnahmekonsole 76 verbunden wird. Die Schwenkwelle 74 und die Schwenkachse, die durch diese erzeugt wird, sind vorzugsweise um einen Winkel aus der Vertikalen geneigt, um es der Halterung 66 zu erlauben, zu schwenken, wenn sich das Mähdeck 12 vertikal verschiebt und dient so dazu, die Spannscheiben 58, 60 in einer mittleren Stellung zwischen den Höhen der Antriebsscheibe 36 und der ersten Antriebsscheibe 46 zu positionieren. Das erste Zugmittel 42 nimmt daher verhältnismäßig geringe Winkel aus der Horizontalen mit Bezug auf die verschiedenen Scheiben ein, um die es geschlungen ist. Ein Verschleiß des Zugmittels 42, wenn es die verschiedenen Scheiben berührt, wird dadurch reduziert und das Zugmittel 42 wird dazu neigen, nicht so oft von den Scheiben herunterzuspringen. Die bevorzugte Ausführungsform wird so ein erstes Zugmittelgetriebe 38 zur Verfügung stellen, das Probleme reduziert oder eliminiert, die aus einer Falschausrichtung von Scheiben und großen Riemen- bzw. Zugmittelwinkeln herrühren.

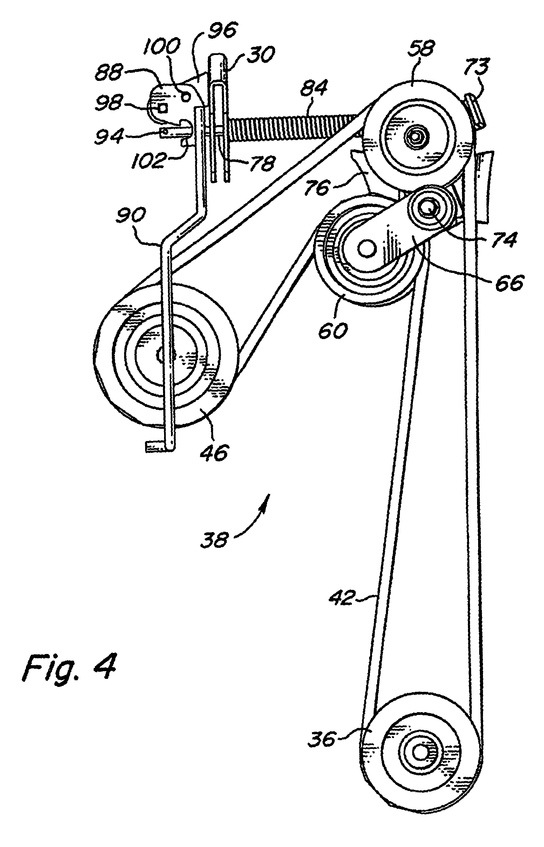

Die ersten Spannscheiben 58, 60 dienen dazu, das erste Zugmittel 42 zu spannen, indem der Weg des Zugmittels 42 effektiv verlängert wird, wenn die Halterung 66 im Uhrzeigersinn gedreht wird. Da beide, die stramm anliegende Spannscheibe 58 und die rückwärtige Spannscheibe 60 mit der Halterung 66 verbunden sind, wird die Menge an Riemen- bzw. Zugmittelspannung, die durch ein Drehen der Halterung 66 erzielt wird, stark erhöht (fast verdoppelt). Ein Spannbolzen 78 wird verwendet, um eine Kraft an der Halterung 66 anzulegen, die dazu neigt, die Halterung 66 im Uhrzeigersinn zu drehen, um so die Spannung des Zugmittels 42 zu erhöhen. Der Spannbolzen 78 ist mit der Halterung 66 mittels eines Endbereichs 80 mit einem nach oben gewandten Gewinde verbunden, welcher in einer entsprechenden Aussparung 82 in der Halterung 66 aufgenommen und mittels einer Mutter 83 gesichert wird. Der Spannstift 78 ist durch eine Schraubenfeder bzw. ein Spannmittel 84 und weiter durch eine Öffnung 86 in der Tragkonsole 30 geführt. Einmal durch die Tragkonsole 30 gelangt, wird der Spannbolzen 78 durch eine Endplatte 88 eines Spannungslösegriffs 90 (wie er in den Figuren 4 - 5 gesehen werden kann) geführt. Das Ende des Spannbolzens 78, das sich durch die Endplatte 88 (gegenüber dem Endbereich 80) erstreckt, ist mit einer Durchgangsbohrung 92 versehen, in welcher ein Sicherungstift 94 angeordnet ist, um den Spannstift 78 davon abzuhalten, rückwärts durch die Endplatte 88 und die Öffnung 86 zurückzugleiten. Die Tragkonsole 30 ist mit einer Griffanbaueinrichtung 96 versehen, die als eine flache, horizontale Erweiterung ausgeführt ist, um welche die U-förmige Endplatte 88 des Spannungslösegriffs 90 angeordnet und über einen Bolzen 98 zur schwenkbaren Bewegung angebracht ist. Um den Spannbolzen 78 bei angebrachtem Sicherungsstift 94 zu installieren, wird der Spannbolzen 78 so gedreht, daß der Sicherungsstift 94 zu den Schenkeln der U-förmigen Endplatte 88 parallel ist. Der Spannbolzen 78 wird in die Tragkonsole 30 und die Endplatte 88 eingesetzt und gedreht, so daß der Sicherungsstift 94 zu den Schenkeln der U-förmigen Endplatte 88 senkrecht steht und der Endbereich 80 des Spannbolzens 78 nach oben gedreht ist und durch die Aussparung 82 aufgenommen und an der Halterung 66 gesichert werden kann. Der Sicherungsstift 94 ist lang genug, um an den Schenkeln der Endplatte 88 anzuliegen, um den Spannbolzen 78 daran zu hindern, hindurchzugelangen, wenn der Sicherungsstift 94 zu den Schenkeln der U-förmigen Endplatte 88 senkrecht steht.

Es wird nun auf Figur 4 Bezug genommen. Während eines Betriebs ist die Schraubenfeder bzw. das Spannmittel 84 zwischen dem Endbereich 80 und der Tragkonsole 30 so zusammengedrückt, daß der Endbereich 80 dazu neigt, die Halterung 66 im Uhrzeigersinn zu drehen. Die Spannscheiben 58, 60 dienen jeweils dazu, den Weg des Zugmittels 42 zu verlängern, um Erschlaffungen auszugleichen und Spannung in dem Zugmittel 42 zu erzeugen. Der Spannungslösegriff 90 wird in seiner normalen Betriebsstellung gezeigt und kann in dieser Stellung gesichert werden, in dem ein Stift in fluchtende Öffnungen 100 in der Endplatte 88 und in der Halteeinrichtung 96 eingesetzt wird. In der normalen Betriebsstellung erstreckt sich der Sicherungsstift 94 über die Endplatte 88 hinaus und der Spannbolzen 78 kann axial vor und zurückgleiten, wenn die Belastung auf das Zugmittel 42, die Halterung 66 dazu bringt, gegen die Feder 84 zu arbeiten.

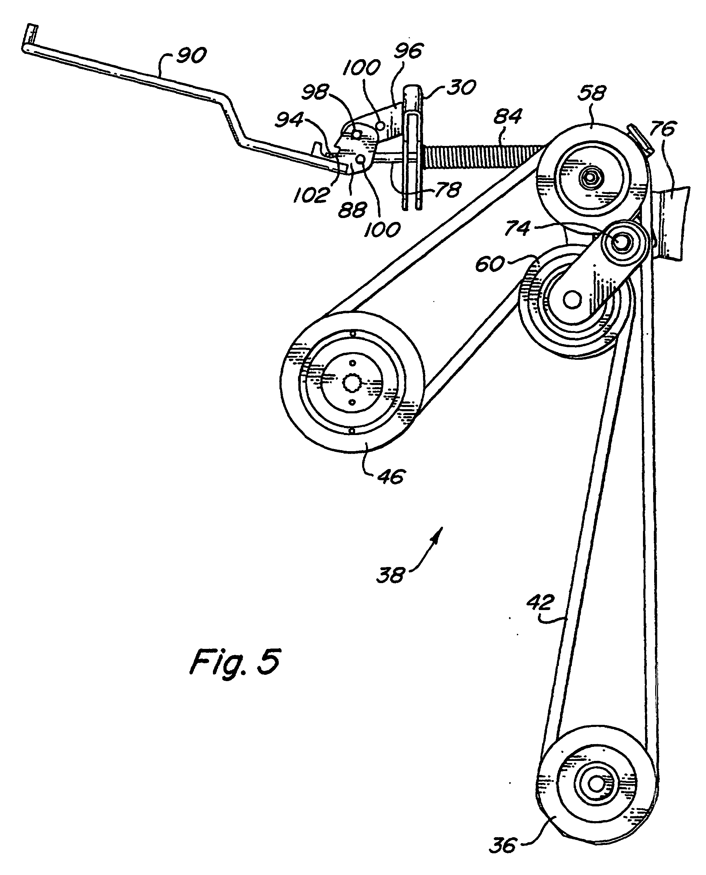

Wenn es wünschenswert ist, das Zugmittel 42 an der erste Antriebseinheit 38 anzubringen oder es von ihr zu entfernen, wird es notwendig, die Spannung auf das Zugmittel 42 zu entlasten, so daß es von den Scheiben, um die es geschlungen ist, abgenommen werden kann. Figur 5 zeigt das erste Zugmittelgetriebe 38, wobei der Spannungslösegriff 90 in eine Installations-/Entfernstellung des Zugmittels 42 gebracht wurde, um eine Verringerung der Riemen- bzw. Zugmittelspannung zu bewirken. Wenn der Spannungslösegriff 90 aus seiner normalen Stellung (in Figur 4 gezeigt) im Uhrzeigersinn gedreht wird, bewegt sich die Endplatte 88 auf den Sicherungsstift 94 des Spannbolzens 78 zu, bis der Sicherungsstift 94 an der Endplatte 88 an einer aussparungsartigen inneren Oberfläche 102, die in die Schenkel der Endplatte 88 eingeformt ist, anliegt. Nachdem der Sicherungsstift 94 an der aussparungsartigen inneren Oberfläche 102 anliegt, wird eine weitere Rotation des Spannungslösegriffs 90 im Uhrzeigersinn den Spannbolzen 78 ziehen, wodurch die Halterung 66 gegen den Uhrzeigersinn dreht, so daß die Spannscheiben 58, 60, die auf dieser angeordnet sind, den Weg des ersten Zugmittels 42 wirksam verkürzen. Das Zugmittel 42 kann dann entfernt oder angebaut werden. Nachdem das Zugmittel 42 angebracht ist, kann der Spannungslösegriff 90 gegen den Uhrzeigersinn in seine normale Stellung gedreht werden, so daß die Kraft das Spannmittel 84 die Halterung 66 im Uhrzeigersinn dreht, wodurch das Zugmittel 42 wieder gespannt wird.

Es wird nun auf Figur 6 Bezug genommen, in der das zweite Zugmittelgetriebe 40 in einer Explosionsdarstellung gezeigt wird. Das zweite Zugmittelgetriebe 40 wird durch das Mähdeck 12 (Figur 2) getragen, indem es auf Stützplatten 104 angebracht wird, welche an dem Mähdeck 12 in Aushöhlungen in dem Gehäuse 34 befestigt sind. Eingeformte Merkmale in dem Gehäuse 34 weisen Versteifungsrippen und flache Oberflächen zum Anbringen der Stützplatten 104 an dem Gehäuse, beispielsweise mittels Schrauben 105 auf. Die eingeformten Einrichtungen des Gehäuses 34 und die Stützplatten 104 arbeiten zusammen, um Stärke und Steifigkeit zu dem Mähwerk 12 hinzuzufügen, was Belastungsverformungen minimiert. Die resultierende Struktur ist im wesentlichen stark, um permanente Verformungen des Gehäuses 34 und von Komponenten des zweiten Zugmittelgetriebes 40 zu verhindern, wenn Belastungen die Kapazität des Zugmittels 52 übersteigen.

In dem zweiten Zugmittelgetriebe 40 wird Rotationsantriebskraft von der ersten Antriebseinheit 38 durch die Antriebsscheibe 48 über die Übersetzungswelle aufgenommen. Das zweite Zugmittel 52 ist um die Antriebsscheibe 48 geschlungen, so daß seine Zähne mit denen der Antriebsscheibe 48 zusammenwirken. Das Zugmittel 52 ist in ähnlicher Weise um die Spannscheiben 62 und die Antriebsscheibe 64 geschlungen. Die Spannscheiben 62 werden als Teil einer Spanneinrichtung verwendet, um das Zugmittel 52 zu spannen und auch um es den Antriebsscheiben 48, 54 zu ermöglichen in entgegengesetzten Richtungen zu rotieren.

Die Antriebsscheiben 48, 54 sind mit den Stützplatten 104 über ihre jeweiligen Mähspindeln 50, 56 (Figur 2) verbunden und rotieren damit, so daß die Rotation der Antriebsscheiben 48, 54 mit der Rotation der Mähmesser 32 identisch ist, die an den unteren Enden der Mähspindeln 50, 56 angebracht sind. Die Antriebsscheiben 48, 54 und die erste Antriebsscheibe 46 oberhalb der Antriebsscheibe 48 sind mit einer Ausrichtungsanzeige wie Vertiefungen 106 versehen, so daß die Messerstellung bestimmt werden kann, ohne daß unter das Gehäuse 34 zu schauen ist. Die Vertiefungen 106 auf jeder Antriebsscheibe 48, 54 sind in Richtung der Messerstellung ausgerichtet, so daß ihre Stellung in Figur 6 einem Messerversatz von 90 Grad entspricht. Mit diesem Versatz können die Messer gegensinnig rotieren und sich mit ihren Schneidkreisen überlappen, ohne aufeinander einzuwirken.

Eine Spanneinrichtung des zweiten Zugmittelgetriebes 40 wird im folgenden beschrieben werden. Die Spanneinrichtung weist Spannscheiben 62 auf, welche drehbar an einer zweiten Halterung 64 über Muttern 108, Schrauben 110 und Lager 112 angebracht sind. Die Halterung 64 selbst weist obere und untere Platten 114 auf, welche identisch ausgebildet sind und durch Schrauben 110 wie auch eine Hülse 116, die zwischen ihnen angeordnet ist, zusammengehalten werden. Die Halterung 64 ist an der Stützplatte 104 mittels einer Schraube 120 angebracht, welche sich durch Schlitze 118 in der oberen und unteren Platte 114 und die Hülse 116 dazwischen erstrecken. Eine Unterlegscheibe 122 und eine Mutter 124 dienen dazu, die Halterung 64 an der Stützplatte 104 gegen eine relative Bewegung zu halten.

Wenn es an der Stützplatte 104 angebracht ist, wird ein Ende der Halterung 64 an einem Anschlag 126 an der Stützplatte 104 anliegen. An dem gegenüberliegenden Ende der Stützplatte 104 ist ein Spannhalter 128 vorgesehen, der eine Öffnung aufweist, in die das Ende eines Spannbolzens 103 eingesetzt ist. Ein Kragen 132 ist an das Ende des Spannbolzens 130 angrenzend vorgesehen, um den Spannbolzen 130 daran zu hindern, weiter durch die Öffnung zu gleiten. Eine Spannmutter 134 und eine Gegenmutter 136 greifen auf einem Gewindebereich des Spannbolzens 130 aneinander an und eine Unterlegscheibe 138, eine Feder bzw. ein Spannmittel 140 und eine Spannhülse 142 sind auf den Spannbolzen 130 aufgesetzt. An einem Ende ist die Spannhülse 142 mit Vorsprüngen 144 versehen, welche in entsprechenden Aussparungen 146 in den oberen und unteren Platten 114 der Halterung 64 aufgenommen werden, um dazu zu dienen eine gewünschte Beziehung zwischen dem Spannbolzen 130 und der Halterung 64 aufrechtzuerhalten.

Nachdem der Spannbolzen 130, die Muttern 134, 136, das Spannmittel 140 und die Spannhülse 142 richtig zwischen dem Spannhalter 128 und der Halterung 64 angeordnet sind, kann die Spannung des Zugmittels 152 erhöht werden, indem die Mutter 124 gelockert wird, um eine relative Bewegung zwischen der Platte 104 und der Halterung 64 zu erlauben und dann die Spannmutter 134 gegenüber der Spannhülse 142 anzuziehen. Die Spannhülse 142 wird dadurch gegen die Halterung 64 gedrückt und bewegt die Spannscheiben 62, um die Länge des Weges des Zugmittels 52 wirksam zu verlängern. Die Anlage des Endes der Halterung 64 an dem Anschlag 126 wird durch die Spannung des Zugmittels 52 aufrechterhalten, aber die Halterung 64 schwenkt und verschiebt sich etwas, wenn Kraft auf ihr anderes Ende durch die Spannhülse 142 aufgebracht wird. Eine Bewegung der Halterung 64 wird begrenzt, wenn der Spannbolzen 120 an dem Ende der als Schlitz ausgeführten Aussparung 118 in der Platte 114 anliegt.

Wenn eine gewünschte Riemen- bzw. Zugmittelspannung erreicht ist, können die Mutter 124 und die Gegenmutter 136 festgezogen werden, um die Spannung zu erhalten. Vorzugsweise wird eine Feder mit einer bekannten Federrate verwendet, um eine bestimmte Riemen- bzw. Zugmittelspannung zu erzielen, welche an oder in der Nähe des Punktes auftreten wird, wenn das Spannmittel 140 in der Spannhülse 142 zusammengedrückt ist, so daß der Spannbolzen 130, die Spannmutter 124, die Unterlegscheibe 138 und die Spannhülse 142 eine steife Struktur bilden. Die Anlage der Unterlegscheibe 138 gegen die Spannhülse 142 ist ein wirksamer sichtbarer Hinweis, so daß die gewünschte Spannung in dem Zugmittel 52, während eines Zusammenbaus und wenn das Zugmittel 52 ersetzt wird, verläßlich reproduziert werden kann.

Vorzugsweise weist eines der Enden des Spannbolzens 130 einen nicht runden Querschnitt wie den gezeigten hexagonalen Querschnitt auf, an welchem mittels eines Motorwerkzeugs während eines Zusammenbaus angegriffen werden kann, da die Nähe der Einstellmutter zu der Platte 104 die Verwendung eines Standardmotorwerkzeugs verhindern kann.

Die Position der Spannscheiben 62 in dem zweiten gezeigten Zugmittelgetriebe 40 stellt einen hohen Grad an Riemen- bzw. Zugmittelumschlingung (größer als 180 Grad) um die Antriebsscheibe 54 zur Verfügung, wodurch weiter dazu beigetragen wird, daß Risiko eines Weiterrutschens des Zugmittels 52 und einer Beeinflussung der Steuerung zu reduzieren. In der bevorzugten Ausführungsform ist die Antriebsscheibe 48 mit einer einstellbaren Riemenleiteinrichtung 148 ausgestattet, die mit der Stützplatte 104 angrenzend an die Antriebsscheibe 48 verschraubt ist, um der Möglichkeit eines Rutschens des Zugmittels 52 weiter entgegenzuwirken.

Entsprechend der vorliegenden Erfindung ist ein zweites Zugmittelgetriebe 40 vorgesehen, in dem die Spannscheiben 62, welche das Zugmittel 52 spannen, fest angebracht und befestigt sind, um eine Bewegung bei normaler und hoher Spitzenbelastung des Zugmittels 52 auf jeder der rechten oder der linken Antriebsscheibe 48, 54 zu verhindern, indem ein fester Pfad steifer Elemente zur Spannung des Zugmittels 52 gebildet wird. Das Zugmittel 52 wird direkt durch Federkräfte gespannt, die durch die Spannhülse 142 erzeugt und gesteuert werden; das Spannmittel 140 ist zu einer vorhersagbaren und wiederholbaren Länge zusammengedrückt, die die erforderliche Zugmittelspannung erzeugt, welche durch ein Annähern des Spannbolzens 120 und der Mutter 124 nicht wesentlich verändert wird.

Obwohl die Erfindung mit Bezug auf die dargestellte Ausführungsform beschrieben wird, sollte es für einen Fachmann deutlich sein, daß die Erfindung in der beschriebenen Form wie auch verändert zur Verwendung in anderen Anwendungsfällen geeignet ist. Die vorliegende Erfindung soll nicht durch die oben beschriebene Ausführungsform sondern nur durch die folgenden Ansprüche begrenzt werden.

## Patentansprüche

1. Mähwerk (12) mit mindestens einem synchronisierten Zugmittelgetriebe (40) und mit zumindest einer Spanneinrichtung mit zwei oder mehreren Spannscheiben (62), die auf ein Zugmittel (52) des Zugmittelgetriebes (40) einwirken können und welche auf einer durch ein Spannmittel (140) belastbaren Halterung (64) vorgesehen sind, **dadurch gekennzeichnet, daß** die Halterung (64) zwei Endbereiche aufweist und zwischen diesen Endbereichen mit dem Mähwerk (12) schwenkbar und in zumindest einer horizontalen Richtung verschiebbar verbunden ist, wobei der erste Endbereich mit dem Spannmittel (140) und der zweite Endbereich mit einem an dem Mähwerk (12) zumindest im wesentlichen fest angebrachten Anschlag (126) zusammenwirken kann und das Spannmittel (140) die Halterung zumindest im wesentlichen in Richtung des Anschlags (126) belastet und wenigstens eine der Spannscheiben (62) zwischen dem zweiten Endbereich und der Verbindung der Halterung (64) mit dem Mähwerk (12) angeordnet ist.

2. Mähwerk nach Anspruch 1, **dadurch gekennzeichnet, daß** das Spannmittel (140) eine Feder, die insbesondere als eine Schraubenfeder ausgeführt sein kann, aufweist oder als eine solche ausgebildet ist.

3. Mähwerk nach Anspruch 2, **dadurch gekennzeichnet, daß** Mittel zur Veränderung der Federspannung vorgesehen sind.

4. Mähwerk nach Anspruch 3, **dadurch gekennzeichnet, daß** die Spanneinrichtung einen Spannbolzen (130), der sich vorzugsweise durch das Spannmittel (140) erstreckt, eine Spannmutter (134), die auf dem Spannbolzen (130) verstellbar angeordnet ist, sowie eine Spannhülse (142) aufweist, die sich in Abhängigkeit von der Stellung der Spannmutter (134) entlang einer Längsachse des Spannbolzens (130) bewegt.

5. Mähwerk nach Anspruch 4, **dadurch gekennzeichnet, daß** die Spannhülse (142) bzw. die Halterung (64) wenigstens einen Vorsprung (144) aufweist, der mit einer entsprechenden Vertiefungen (146) in der Halterung (64) bzw. in der Spannhülse (142) zusammenwirken können.

6. Mähwerk nach einem oder mehreren der vorherigen Ansprüche, **dadurch gekennzeichnet, daß** zumindest die erste Spannscheibe (62) an der Halterung (64) einerseits der Verbindung der Halterung (64) mit dem Mähwerk (12) und zumindest die zweite Spannscheibe (62) andererseits derselben angeordnet ist.

7. Mähwerk nach einem oder mehreren der vorherigen Ansprüche, **dadurch gekennzeichnet, daß** die Halterung (64) eine obere und eine untere Platte (114) aufweist, die vorzugsweise zumindest im wesentlichen identisch ausgeführt sind.

8. Mähwerk nach einem oder mehreren der vorherigen Ansprüche, **dadurch gekennzeichnet, daß** die Spannscheiben (62) derart angeordnet sind, daß wenigstens eine von dem Zugmittel (52) um wenigstens 180 Grad umschlungen wird.

9. Mähwerk nach einem oder mehreren der vorherigen Ansprüche, **gekennzeichnet durch** eine Mehrzahl von Arbeitseinheiten, von denen vorzugsweise wenigstens zwei in entgegengesetzten Richtungen angetrieben werden.

10. Mähwerk nach Anspruch 8, **dadurch gekennzeichnet, daß** die jeweiligen Antriebsscheiben Mittel zur Anzeige der Stellung der Arbeitseinheiten aufweisen.

11. Fahrzeug bzw. Gerät (10) zur Rasen-, Garten- bzw. Grundstückspflege mit einem Mähwerk (12) nach einem oder mehreren der vorherigen Ansprüche.

## Claims

1. A mower mechanism (12) with at least one synchronised tension means drive (40) and with at least one tensioning device with two or more tensioning wheels (62) which can act on a means acting in tension (52) of the tension means drive (40) and which are provided on a carrier (64) which can be biased by a tensioning means (140), **characterized in that** the carrier (64) has two end regions and is connected to the mower mechanism (12) pivotally and capable of displacement in at least one horizontal direction between these end regions, wherein the first end region can cooperate with the tensioning means (140) and the second end region can cooperate with a stop (126) fitted on the mower mechanism (12) at least substantially fixedly and the tensioning means (140) biases the carrier substantially in the direction of the stop (126) and at least one of the tensioning wheels (62) is located between the second end region and the connection of the carrier (64) to the mower mechanism (12).

2. A mower mechanism according to claim 1, **characterized in that** the tensioning means (140) comprises or is formed as a spring, which can in particular be implemented as a helical spring.

3. A mower mechanism according to claim 2, **characterized in that** means are provided for altering the spring tension.

4. A mower mechanism according to claim 3, **characterized in that** the tensioning device comprises a tensioning bolt (130) which preferably extends through the tensioning means (140), a tensioning nut (134) which is adjustably arranged on the tensioning bolt (130) and a tensioning sleeve (142) which moves along a longitudinal axis of the tensioning bolt (130) in dependence on the position of the tensioning nut (134).

5. A mower mechanism according to claim 4, **characterized in that** the tensioning sleeve (142) or the carrier (64) has at least one projection (144) which can cooperate with a corresponding depression (146) in the carrier (64) or in the tensioning sleeve (142).

6. A mower mechanism according to one or more of the preceding claims, **characterized in that** at least the first tensioning wheel (62) is arranged on the carrier (64) on one side of the connection of the carrier (64) to the mower mechanism (12) and at least the second tensioning wheel (62) is arranged on the other side thereof.

7. A mower mechanism according to one or more of the preceding claims, **characterized in that** the carrier (64) comprises an upper and a lower plate (114) which are preferably at least substantially of identical form.

8. A mower mechanism according to one or more of the preceding claims, **characterized in that** the tensioning wheels (62) are so arranged that at least one is wrapped over at least 180 degrees by the means acting in tension (52).

9. A mower mechanism according to one or more of the preceding claims, **characterized by** a plurality of working units of which at least two are preferably driven in opposite directions.

10. A mower mechanism according to claim 8, **characterized in that** the respective drive wheels comprise means for indicating the position of the working units.

11. A vehicle or implement (10) for lawn, garden or plot care, with a mower mechanism (12) according to one or more of the preceding claims.

## Revendications

1. Faucheuse (12) comportant au moins un mécanisme à traction synchronisée (40) et au moins un système de mise sous tension comportant deux ou plusieurs galets tendeurs (62) pouvant agir sur un organe de traction (52) du mécanisme à traction (40), et qui sont prévus sur un support (64) pouvant subir l'action d'un élément tendeur (140), **caractérisée en ce que** le support (64) présente deux zones terminales et peut, avec la faucheuse (12) lui étant reliée, pivoter entre ces zones terminales et se déplacer dans au moins une direction horizontale, la première zone terminale pouvant coopérer avec l'élément tendeur (140), et la seconde zone terminale pouvant coopérer avec un taquet (126) monté au moins sensiblement fixe sur la faucheuse (12), l'élément tendeur (140) exerçant son action sur le support au moins sensiblement dans la direction du taquet (126), et au moins l'un des galets tendeurs (62) étant disposé entre la seconde zone terminale et la liaison du support (64) avec la faucheuse (12).

2. Faucheuse selon la revendication 1, **caractérisée en ce que** l'élément tendeur (140) comporte un ressort qui peut consister en un ressort hélicoïdal, ou qui est constitué en tant que tel.

3. Faucheuse selon la revendication 2, **caractérisée en ce que** sont prévus des moyens pour la modification de la tension du ressort.

4. Faucheuse selon la revendication 3, **caractérisée en ce que** le système de mise sous tension comporte un boulon sous tension (130), qui s'étend, de préférence, à travers l'élément tendeur (140), et un écrou tendeur (134), qui est disposé mobile sur le boulon sous tension (130), ainsi qu'une douille sous tension (142), qui se déplace en fonction de la position de l'écrou tendeur (134) le long de l'axe longitudinal du boulon sous tension (130).

5. Faucheuse selon la revendication 4, **caractérisée en ce que** la douille sous tension (142), ou le support (64), comportent au moins un relief (144), qui peut coopérer avec un creux correspondant (146) pratiqué dans le support (64) ou dans la douille sous tension (142).

6. Faucheuse selon l'une ou plusieurs des revendications précédentes, **caractérisée en ce qu'**au moins le premier galet tendeur (62) est disposé sur le support (64) d'un côté de la liaison du support (64) avec la faucheuse (12) et au moins le second galet tendeur (62) est disposé de l'autre côté de celle-ci.

7. Faucheuse selon l'une ou plusieurs des revendications précédentes, **caractérisée en ce que** le support (64) comporte une plaque supérieure et une plaque inférieure (114), qui sont de préférence pratiquement identiques.

8. Faucheuse selon l'une ou plusieurs des revendications précédentes, **caractérisée en ce que** les galets tendeurs (62) sont disposés de telle sorte qu'au moins l'un est entouré sur au moins 180° par l'organe de traction (52).

9. Faucheuse selon l'une ou plusieurs des revendications précédentes, **caractérisée par** une pluralité d'unités de travail dont, de préférence, au moins deux sont entraînées dans des directions opposées.

10. Faucheuse selon la revendication 8 **caractérisée en ce que** chacun des galets d'entraînement comporte des moyens pour l'indication de la position des unités de travail.

11. Véhicule ou appareil (10) destiné à l'entretien de pelouses, de jardins ou de terrains, comportant une faucheuse (12) selon l'une ou plusieurs des revendications précédentes.
